# EUROPÄISCHE PATENTSCHRIFT

(11) **EP 3 050 417 B1**
(45) Veröffentlichungstag und Bekanntmachung des Hinweises auf die Patenterteilung: **11.04.2018**
(21) Anmeldenummer: 15190859.7
(22) Anmeldetag: 21.10.2015
(51) Int. Cl.: A01C 5/06, A01B 49/00

(54) **SÄSCHARTRAGARM EINER SÄMASCHINE**
SOWING COULTER HOLDER ARM OF A SOWING MACHINE
BRAS DE SUPPORT DE SEMOIR

(30) Priorität: 29.01.2015 DE 202015000720 U
(43) Veröffentlichungstag der Anmeldung: 03.08.2016
(73) Patentinhaber: PÖTTINGER Landtechnik GmbH, 4710 Grieskirchen (AT)
(72) Erfinder: PREIMESS, Hans-Jörg, 9811 Lendorf (AT); STADLBAUER, Franz, 4633 Kematen am Innbach (AT); WITZMANN, Alexander, 4720 Kallham (AT)
(74) Vertreter: Thoma, Michael

(56) Entgegenhaltungen:
- EP-A1- 2 468 485
- US-A1- 2007 089 888
- US-A1- 2012 291 681

## Beschreibung

Die vorliegende Erfindung betrifft einen Säschartragarm einer Sämaschine, mit einem länglichen Tragarmkorpus, der ein Tragarmlagerstück zum Lagern des Säschartragarms mit einem Scharlagerstück zum Lagern einer Säschar verbindet. Die Erfindung betrifft auch eine Sämaschine mit einer Vielzahl solcher Säschartragarme.
Sämaschinen wie beispielsweise Drillmaschinen oder Einzelkornmaschinen weisen üblicherweise eine Vielzahl von Säschare auf, die in einer oder mehreren Reihen nebeneinander angeordnet sind, um mit Scharwerkzeugen Bodenfurchen zu ziehen und das Saatgut und/oder auch Dünger im Boden abzulegen. Die Scharwerkzeuge wie beispielsweise Scharscheiben werden dabei üblicherweise an Säschartragarmen, die bisweilen auch als Drillhebel bezeichnet werden, gelagert, wobei auch die Ablege- bzw. Ausbringrohre oder -leitungen an dem Säscharträger gelagert werden können, um das Saatgut und/oder den Dünger in die Bodenfurche abzulegen. Bisweilen werden auch nachlaufende Andruckwalzen und/oder Zustreicher an den Säschartragarmen gelagert.

Die Schrift US 2012/0291681 A1 lehrt ein Bodenbearbeitungsgerät mit Scharscheiben, die über Schartragarme gelagert sind, wobei bezüglich der Schartragarme ausgeführt ist, dass sie aus Stahl oder Aluminium oder auch Plastik bestehen können. Die US 2007/0089888 A1 zeigt ein weiteres Bodenbearbeitungsgerät mit Scharwerkzeugen, die an Schartragarmen befestigt sind, wobei die Schartragarme aus Stahlrohren oder alternativ aus anderen Materialien wie Plastik oder Aluminium bestehen sollen. Die Schrift EP 2 468 485 A1 schließlich zeigt einen Schwenklagerbeschlag für Flugzeuge, der aus faserverstärktem Kunststoff mit einer darin eingebetteten Lagerbuchse aus Metall bestehen soll.

Um die Bodenfurchen in den Boden ziehen zu können, müssen die Scharwerkzeuge mit einer ausreichenden Andruckkraft auf den bzw. in den Boden gedrückt werden, was je nach Bodenbeschaffenheit zum Teil recht hohe Kräfte sind. Andererseits sollen die Säschare in aufrechter Richtung nachgiebig sein, um eine Bodenanpassung zu erreichen und beim Überfahren von Bodenwellen oder Unebenheiten eine gleichmäßige Furchentiefe und Ablagetiefe zu ermöglichen. Hierzu sind die Säschartragarme üblicherweise recht lang ausgebildet und nicht zu steil angestellt, um auf- und abfedern bzw. -schwenken zu können, wenn Bodenwellen überfahren werden. Dementsprechend werden die Säscharträger hohen Biegebelastungen und an den Befestigungsabschnitten, an denen die Scharwerkzeuge und Lagerelemente befestigt sind, auch hohen Zug- und Druckbelastungen ausgesetzt, so dass die Säscharträger eine entsprechende Festigkeit benötigen, um dem rauen Betrieb standzuhalten. Derartige Drillhebel bzw. Säscharträger werden deshalb bislang überwiegend aus Stahl gefertigt, was jedoch zu einem hohen Gewicht der Sämaschine führt, da Sämaschinen nicht nur einen, sondern eine Vielzahl solcher Drillhebel aufweisen. Dies führt nicht nur zu einer Erhöhung der Bodenaufstandskraft und damit der Bodenbeanspruchung, des Rollwiderstands und des Energieverbrauchs der Sämaschine, sondern führt aufgrund der hohen Trägheit beim Überfahren von Schlaglöchern oder kleineren Bodenrillen auch zu einer starken Beanspruchung der Maschine und des Bodens.

Der vorliegenden Erfindung liegt die Aufgabe zugrunde, einen verbesserten Säscharträger einer Sämaschine zu schaffen, der Nachteile des Standes der Technik vermeidet und Letzteren in vorteilhafter Weise weiterbildet. Insbesondere soll ein im Gewicht deutlich leichterer Säschartragarm geschaffen werden, dessen Tragfestigkeit und Widerstandsfähigkeit dennoch ausreichend hoch ist, um dem harten Arbeitseinsatz zu widerstehen.

Erfindungsgemäß wird die genannte Aufgabe durch einen Säscharträger gemäß Anspruch 1 sowie eine Sämaschine gemäß Anspruch 13 gelöst. Bevorzugte Ausgestaltungen der Erfindung sind Gegenstand der abhängigen Ansprüche.

Es wird also vorgeschlagen, durch geschickte Kombination von harten und Leichtbau-Abschnitten die Vorteile von Leichtbau- und Hartmaterialien zusammenzuführen, ohne dies jedoch mit den jeweiligen Nachteilen reiner Leichtmaterialträger bzw. reiner Hartmaterialträger zu erkaufen. In verschiedenen Abschnitten des Säschartragarms werden gezielt unterschiedliche Materialien eingesetzt, um in hochbeanspruchten Abschnitten eine hohe Druck- und Scherfestigkeit zu haben und in weniger beanspruchten Abschnitten leicht zu bauen. Erfindungsgemäß ist der Säschartragarm als Kompositkorpus aus verschiedenen Materialien ausgebildet, wobei zumindest ein Hauptabschnitt des Tragarmkorpus aus einem Leichtbaumaterial gebildet ist, das an einem oder mehreren Teilabschnitten durch einen oder mehrere Hartmaterialeinsätze, der/die in das Leichtbaumaterial eingebettet ist/sind, verstärkt ist. Insbesondere kann der Säschartragarm an lokal besonders beanspruchten Stellen, an denen punktuelle Sonderlasten auftreten, durch Hartmetalleinsätze verstärkt sein, während die übrigen Tragarmabschnitte, die solchen punktuellen Sonderlasten nicht unterliegen und im Wesentlichen nur auf Biegung und ggf. auch auf Torsion beansprucht werden, im Wesentlichen vollständig aus dem Leichtbaumaterial gefertigt sein können.

Gemäß der Erfindung ist dabei am unteren Endabschnitt des Säschartragarms bzw. das Scharlagerstück, an dem ein Scharwerkzeug befestigt ist, durch einen Hartmaterialeinsatz verstärkt. Hierbei kann der genannte Hartmaterialeinsatz insbesondere ein Verankerungs- und/oder Lagerelement zum Befestigen eines Säscharteils wie beispielsweise einer Scharscheibe an dem Säschartragarm bilden.

Das genannte Verankerungs- und/oder Lagerelement aus Hartmaterial kann beispielsweise eine Gewindehülse und/oder eine Lagerhülse bilden, in die ein Befestigungsbolzen zum Lagern des Scharwerkzeugs oder eines anderen Anbauteils eingeschraubt oder eingesteckt werden kann. Durch ein solches Verankerungs- bzw. Lagerelement aus Hartmetall können die lokalen Lastspitzen, insbesondere hohe Zug- und Druckkräfte und Flächenpressungen abgefangen und Verformungen, wie sie bei direkter Befestigung im Leichtbaumaterial auftreten würden, vermieden werden.

Alternativ oder zusätzlich zu einem solchen zumindest einen Hartmaterialeinsatz im Scharlagerstück kann auch im Bereich des Tragarmlagerstücks des Säschartragarms ein solcher Hartmaterialeinsatz vorgesehen sein, der ein Verankerungs- und/oder Lagerelement zum Befestigen eines Tragarmlagerteils bilden kann. Besitzt der Säschartragarm beispielsweise einen manschettenförmigen Lagerkopf zum Umgreifen eines Rahmenträgerprofils, kann der Lagerkopf zweiteilig ausgebildet und mit Schraubbolzen zusammengehalten sein. Der genannte Hartmetalleinsatz kann eine Gewindehülse oder eine Steckhülse bilden, an der der genannte Schraubbolzen angreifen kann.

In vorteilhafter Weiterbildung der Erfindung können die genannten Hartmetalleinsätze gegenüber dem umgebenden Leichtbaumaterial erhaben ausgebildet sein. Eine erhaben ausgebildete Lagerfläche des jeweiligen Hartmetalleinsatzes kann beispielsweise einige wenige Millimeter über das umgebende Leichtbaumaterial vorstehen, so dass Anzugs- und Presskräfte in den Hartmaterialeinsatz eingeleitet werden und das umgebende Leichtbaumaterial von Verformungen verschont wird.

Die genannten Hartmaterialeinsätze können insbesondere aus Stahl bestehen, beispielsweise in Form von Stahlhülsen oder Stahlplatten oder Stahlbändern.

Das Leichtbaumaterial kann grundsätzlich ebenfalls ein metallischer Werkstoff sein, beispielsweise Aluminium oder ein anderes Leichtmetall oder eine Aluminium- und/oder Leichtmetalllegierung. In alternativer, vorteilhafter Weiterbildung der Erfindung können die Leichtbauabschnitte des Säscharträgers aber auch aus einem nicht-metallischen Werkstoff, vorzugsweise Kunststoff bestehen, wobei hier insbesondere ein faserverstärkter Kunststoff wie beispielsweise kohlefaser- und/oder aramidfaserverstärkte Duro- oder Thermoplaste vorgesehen sein können.

Die genannten Hartmetalleinsätze können hierbei vorteilhafterweise eingegossen oder einlaminiert oder in einem anderen Urformschritt unmittelbar in das Leichtbaumaterial eingelassen werden. Alternativ können die Hartmetalleinsätze jedoch auch nachträglich, d.h. nach Formung des Leichtbauabschnittes in diesem verankert werden, beispielsweise durch Einfräsen einer passenden Ausnehmung und Einkleben und/oder Einpressen des Hartmaterialeinsatzes.

In Weiterbildung der Erfindung kann ein überwiegender Teil des Säschartragarms aus dem Leichtbaumaterial gefertigt sein, wobei vorteilhafterweise mehr als 2/3 oder mehr als 3/4, ggf. auch mehr als 4/5 des Säschartragarms aus dem Leichtbaumaterial bestehen können, wobei dies beispielsweise auf das Materialvolumen des Säscharträgers bezogen sein kann. Dieser hohe Anteil an Leichtbauabschnitten beruht auf der Erkenntnis, dass der Säscharträger an sich nur lokal oder punktuell so hohen Belastungen unterliegt, die vom Leichtbaumaterial alleine nicht abgefangen werden können, so dass der weitaus überwiegende Teil des Scharträgers aus dem Leichtbaumaterial gefertigt sein kann.

Vorteilhafterweise wird ein Leichtbaumaterial mit einer Dichte von weniger als 5 kg/dm³ gewählt, vorzugsweise weniger als 3 kg/dm³. Hierdurch kann das Gewicht gegenüber Stahlträgern deutlich reduziert werden.

Um trotz der überwiegenden Verwendung von Leichtbaumaterial eine ausreichende Biegesteifigkeit und Torsionsfestigkeit für die Säschartragarme zu erreichen, kann der längliche Tragarmkorpus des Säscharträgers zumindest teilweise ein T-förmiges, TT-förmiges oder I-förmigen Querschnittsprofil besitzen, wobei sich der Zentralschenkel bzw. lange Schenkel dieser Profilformen vorteilhafterweise in aufrechter Richtung erstreckt. Hierdurch können die hohen Kräfte in aufrechter Richtung, die vom Boden her in die Scharscheiben eingeleitet werden, abgefangen werden und dennoch ein geringes Bauvolumen und damit ein geringes Gewicht erzielt werden. Alternativ zu solchen stegförmigen Profilquerschnitten kann der längliche Tragarmkorpus auch einen Hohlprofilquerschnitt, insbesondere einen geschlossenen Ringquerschnitt, an den ggf. Verstärkungsrippen angeformt sein können, besitzen. Hierdurch kann eine erhöhte Torsionssteifigkeit bei gleichzeitig niedrigem Gewicht erzielt werden.

Die Erfindung wird nachfolgend anhand eines bevorzugten Ausführungsbeispiels und einer zugehörigen Zeichnung näher erläutert. In der Zeichnung zeigt:
- Fig. 1:: eine schematische Seitenansicht einer Sämaschine, deren Säschare jeweils mittels eines Säscharträgers elastisch aufgehängt sind, und
- Fig. 2:: eine perspektivische Darstellung eines Säscharträgers nach einer vorteilhaften Ausführung der Erfindung.

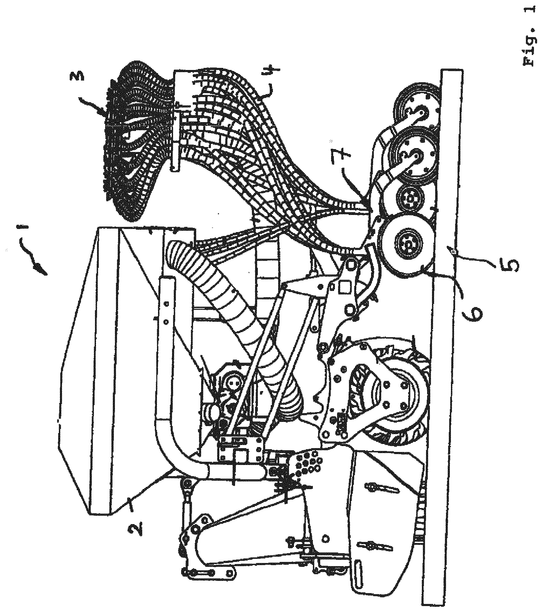

Wie Fig. 1 zeigt, kann eine Sämaschine 1 einen Speicherbehälter 2, aus dem Saatgut und/oder Dünger über einen Verteilerkopf 3 und Verteilerleitungen 4 zu Ausbringelementen bzw. Säschare 5 gefördert werden kann, um im Boden abgelegt zu werden. Die genannten Säschare 5 können hierbei geeignete Scharwerkzeuge 6 beispielsweise in Form von Scharscheiben umfassen, um Bodenfurchen zu ziehen, in denen das Saatgut abgelegt werden kann. Die zuvor genannten Verteilerleitungen 4 können über ein Fallrohr oder Ablegerohr im Bereich der Scharwerkzeuge 6 münden, um das Saatgut in der Bodenfurche abzulegen. Den genannten Scharwerkzeugen 6 nachlaufend können weitere Bodenbearbeitungswerkzeuge wie Andruckrollen und Zustreicher angeordnet sein.

Die genannten Säscharwerkzeuge 6 sind hierbei jeweils an einem Säschartragarm 7 gelagert, der an seinem vorderen oberen Ende ein Tragarmlagerstück 8 aufweist, mit dem der Säschartragarm 7 an einem Tragrahmenprofil gelagert ist. In an sich bekannter Weise können hierbei eine Vielzahl von Säschartragarmen 7 nebeneinander an einem Rahmenträgerprofil gelagert sein, das sich liegend quer zur Fahrtrichtung am Maschinenrahmen der Sämaschine erstreckt und beispielsweise einen rechteckigen Querschnitt besitzen kann. Die Tragarmlagerstücke 8 der Säschartragarme 7 können das genannte Rahmenträgerprofil manschettenartig umgreifen, so dass sie sich unter Zwischenschaltung von Gummiquetschelementen und unter Verformung dieser Gummiquetschelemente gegenüber dem Rahmenträgerprofil verdrehen können, so dass die Säschartragarme 7 auf und ab schwenken bzw. federn können.

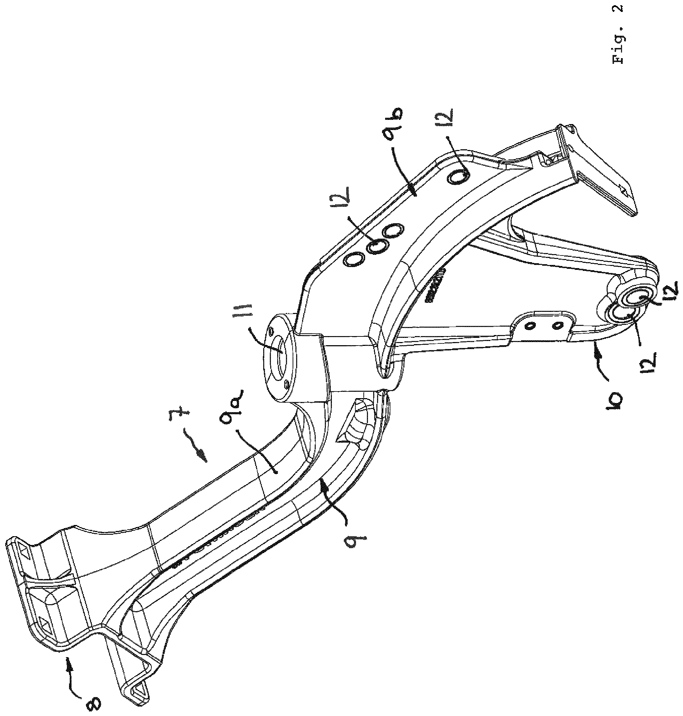

Wie Fig. 2 zeigt, kann der Säschartragarm 7 einen insgesamt länglichen Tragarmkorpus 9 aufweisen, der das genannte Tragarmlagerstück 8 mit einem Scharträgerstück 10 am unteren, hinteren Ende des Säschartragarms 7 verbindet. An dem genannten Scharträgerstück 10 sind die zuvor genannten Scharwerkzeug 6 befestigt. Wie Fig. 2 zeigt, kann der genannte Tragarmkorpus 9 einen geschwungenen bzw. leicht gekrümmten Verlauf besitzen, beispielsweise in Form einer S-förmig gekrümmten Längsachse wie dies Fig. 2 zeigt.

Der Tragarmkorpus 9 kann vorteilhafterweise in einem zentralen Hauptabschnitt 9a, der sich bis zu dem Tragarmlagerstück 8 nach oben erstrecken kann, einen TT-förmigen bzw. I-förmigen Querschnitt besitzen, wobei ein aufrechter Zentralsteg zwei Querstege verbinden kann, die sich an den oberen und unteren Enden des genannten Zentralstegs anschließen können. In einem weiteren Hauptabschnitt und/oder unteren Endabschnitt 9b kann der genannte Tragarmkorpus 9 ein einfaches T-Profil besitzen, wobei hier vorteilhafterweise der Quersteg an der Unterseite des aufrechten Hauptstegs angebracht sein kann, vgl. Fig. 2. Grundsätzlich sind jedoch auch andere Querschnittsformen als die in Fig. 2 gezeigte Querschnittsform möglich.

An den genannten Haupt- und/oder Endabschnitt 9a kann sich das zuvor genannte Scharlagerstück 10 anschließen, welches beispielsweise vom Hauptabschnitt nach unten auskragen kann. Das Scharlagerstück 10 kann dabei insgesamt betrachtet - grob gesprochen - plattenförmig ausgebildet sein.

Wie Fig. 2 zeigt, kann der Tragarmkorpus 9 im Bereich des Hauptabschnitts 9a und/oder des Endabschnitts 9b eine Särohraufnahme 11 aufweisen, durch die hindurch der Auslaufabschnitt eines Särohrs geführt sein kann.

Der genannte Tragarmkorpus 9 einschließlich des überwiegenden Teils des Scharträgerstücks 10 und des überwiegenden Teils des Tragarmlagerstücks 8 kann aus einem Leichtbaumaterial spritzgegossen oder druckgegossen oder in anderer Weise gefertigt sein, wobei hier insbesondere Aluminium, eine Aluminiumlegierung oder ein anderes Leichtmetall oder eine Leichtmetalllegierung vorgesehen sein kann.

An punktuell besonders beanspruchten Stellen kann der Säschartragarm 7 Hartmaterial, insbesondere Hartmetall oder -stahleinsätze oder -verstärkungen 12 aufweisen, um durch übermäßigen Druck oder übermäßige Beanspruchung Verformungen an den Leichtmaterialabschnitten zu vermeiden.

Insbesondere können im Bereich des Scharträgerstücks 10 solche Hartmaterialeinsätze 12 vorgesehen sein, die Gewinde- oder Lagerhülsen bilden können, wobei die genannten Hartmaterialeinsätze 12 vorteilhafterweise gegenüber dem Leichtmaterial erhaben ausgebildet sein können bzw. vorspringende Lagerflächen 13 besitzen können.

Ferner können auch an dem Endabschnitt 9b solche Lagerelemente bildende Hartmetall- bzw. Hartmaterialeinsätze 12 vorgesehen sein, beispielsweise um weitere Bodenbearbeitungswerkzeuge wie Andruckwalzen oder Zustreicher befestigen zu können.

Auch im Bereich des Tragarmlagerstücks 8 können Hartmaterialeinsätze vorgesehen sein.

## Patentansprüche

1. Säschartragarm für eine Sämaschine (1), mit einem länglichen Tragarmkorpus (9), der ein Tragarmlagerstück (8) zum Lagern des Säschartragarms an einem ersten Endabschnitt des Säschartragarms mit einem Scharlagerstück (10) zum Lagern eines Säscharteils (6) an einem zweiten Endabschnitt des Säschartragarms verbindet, **dadurch gekennzeichnet, dass** der Säschartragarm als Kompositkorpus aus verschiedenen Materialien ausgebildet ist, wobei zumindest ein zentraler Hauptabschnitt (9a) des Tragarmkorpus (9) zwischen Tragarmlagerstück (8) und Scharlagerstück (10) aus einem Leichtbaumaterial besteht, das an dem Scharlagerstück (10) durch einen Hartmaterialeinsatz (12), der ein Verankerungs- und/oder Lagerelement zum Befestigen eines Säscharteils an dem Säschartragarm bildet und in dem Leichtbaumaterial eingebettet ist, verstärkt ist.

2. Säschartragarm nach dem vorhergehenden Anspruch, wobei das Verankerungs- und/oder Lagerelement aus Hartmaterial eine Gewindehülse oder eine Lagerhülse bildet.

3. Säschartragarm nach einem der vorhergehenden Ansprüche, wobei das Tragarmlagerstück einen weiteren Hartmaterialeinsatz (12) aufweist, der ein Verankerungs- und/oder Lagerelement zum Befestigen eines Tragarmlagerteils aufweist.

4. Säschartragarm nach einem der vorhergehenden Ansprüche, wobei der Hartmaterialeinsatz (12) eine gegenüber dem umgebenden Leichtbaumaterial erhaben ausgebildete Lager- oder Auflagefläche besitzt.

5. Säschartragarm nach einem der vorhergehenden Ansprüche, wobei mehr als 75 % des Materialvolumens des Kompositkorpus aus Leichtbaumaterial besteht.

6. Säschartragarm nach einem der vorhergehenden Ansprüche, wobei der zumindest eine Hartmaterialeinsatz (12) aus Stahl besteht.

7. Säschartragarm nach einem der vorhergehenden Ansprüche, wobei das Leichtbaumaterial eine Dichte von weniger als 3/4 der Dichte von Stahl besitzt, insbesondere eine Dichte von weniger als 5 kg/dm³ besitzt.

8. Säschartragarm nach einem der vorhergehenden Ansprüche, wobei das Leichtbaumaterial aus Aluminium, einer Aluminiumlegierung, einem Leichtmetall oder einer Leichtmetalllegierung besteht.

9. Säschartragarm nach einem der Ansprüche 1 bis 7, wobei das Leichtbaumaterial aus einem nicht-metallischen Werkstoff besteht, insbesondere aus einem faserverstärkten Kunststoff.

10. Säschartragarm nach einem der vorhergehenden Ansprüche, wobei der Tragarmkorpus (9), insbesondere dessen Hauptabschnitt (9a) aus Leichtbaumaterial, zumindest abschnittsweise ein Vollmaterialkorpus mit einem T-förmigen oder TT-förmigen oder I-förmigen Querschnittsprofil ausgebildet ist.

11. Säschartragarm nach einem der Ansprüche 1 bis 9, wobei der Tragarmkorpus (9) zumindest abschnittsweise als Hohlkörper mit einem geschlossenen Hohlprofilquerschnitt ausgebildet ist.

12. Säschartragarm nach einem der vorhergehenden Ansprüche, wobei der Tragarmkorpus (9) als Gusskörper ausgebildet ist und der zumindest eine Hartmaterialeinsatz (12) in das gegossene Leichtbaumaterial eingegossen oder nachträglich darin verankert ist.

13. Sämaschine mit einer Mehrzahl von Säschartragarmen (7) gemäß einem der vorhergehenden Ansprüche.

## Claims

1. Sowing coulter holder arm for a sowing machine (1), with a elongate holder arm body (9), which connects a holder arm bearing portion (8) for bearing the sowing coulter holder arm on a first end section of the sowing coulter holder arm to a coulter bearing portion (10) for bearing a sowing coulter part (6) on a second end section of the sowing coulter holder arm, **characterized in that** the sowing coulter holder arm is configured as a composite body of different materials, wherein at least a central main section (9a) of the holder arm body (9) between holder arm bearing portion (8) and coulter bearing portion (10) consists of a lightweight material which is reinforced at the coulter bearing portion (10) by means of a hard material insert (12), which forms an anchoring and/or supporting element for fastening a sowing coulter part to the sowing coulter holder arm and is embedded in the lightweight material.

2. Sowing coulter holder arm according to the preceding claim, wherein the anchoring and/or supporting element of hard material forms a threaded sleeve or a bearing sleeve.

3. Sowing coulter holder arm according to one of the preceding claims, wherein the holder arm bearing portion comprises a further hard material insert (12), which comprises an anchoring and/or supporting element for fastening a holder arm bearing part.

4. Sowing coulter holder arm according to one of the preceding claims, wherein the hard material insert (12) has a supporting or bearing surface elevated with respect to the surrounding lightweight material.

5. Sowing coulter holder arm according to one of the preceding claims, wherein more than 75% of the material volume of the composite body consists of lightweight material.

6. Sowing coulter holder arm according to one of the preceding claims, wherein the at least one hard material insert (12) consists of steel.

7. Sowing coulter holder arm according to one of the preceding claims, wherein the lightweight material has a density of less than ¾ of the density of steel, in particular a density of less than 5 kg/dm³.

8. Sowing coulter holder arm according to one of the preceding claims, wherein the lightweight material consists of aluminum, an aluminum alloy, a light metal or a light metal alloy.

9. Sowing coulter holder arm according to one of claims 1 to 7, wherein the lightweight material consists of a non-metal material, in particular of a fiber-reinforced plastic material.

10. Sowing coulter holder arm according to one of the preceding claims, wherein the holder arm body (9), in particular the main section (9a) thereof of lightweight material, is configured at least in sections as a solid material body with a T-shaped or TT-shaped or I-shaped cross-sectional profile.

11. Sowing coulter holder arm according to one of claims 1 to 9, wherein the holder arm body (9) is configured at least in sections as a hollow body with a closed hollow profile cross-section.

12. Sowing coulter holder arm according to one of the preceding claims, wherein the holder arm body (9) is configured as a cast body and the at least one hard material insert (12) is cast into the cast lightweight material or afterwards anchored therein.

13. Sowing machine with a plurality of sowing coulter holder arms (7) according to one of the preceding claims.

## Revendications

1. Bras de support de soc de semoir pour un semoir (1), comprenant un corps de bras de support (9) allongé qui relie une pièce de palier (8) de bras de support ,destinée à loger le bras de support de soc de semoir sur une première section terminale du bras de support de soc de semoir, à une pièce de palier de soc (10) destinée à loger une pièce de soc de semoir (6) sur une deuxième section terminale du bras de support de soc de semoir, **caractérisé en ce que** le bras de support de soc de semoir est réalisé comme corps composite constitué de plusieurs matériaux, au moins une section principale (9a) centrale du corps de bras de support (9) située entre la pièce de palier (8) de bras de support et la pièce de palier de soc (10) étant constituée d'un matériau léger qui est renforcé sur la pièce de palier de soc (10) par un insert de matériau dur (12), lequel forme un élément de fixation et/ou de logement pour la fixation d'une partie de soc de semoir sur le bras de support de soc de semoir et est incorporé dans le matériau léger.

2. Bras de support de soc de semoir selon la revendication précédente, l'élément de fixation et/ou de logement en matériau dur formant une douille filetée ou une douille de palier.

3. Bras de support de soc de semoir selon l'une quelconque des revendications précédentes, la pièce de palier de bras de support présentant un insert de matériau dur (12) supplémentaire, lequel présente un élément de fixation et/ou de palier pour la fixation d'une pièce de palier de bras de support.

4. Bras de support de soc de semoir selon l'une quelconque des revendications précédentes, l'insert de matériau dur (12) possédant une surface de palier ou d'appui réalisée de manière convexe par rapport au matériau léger environnant.

5. Bras de support de soc de semoir selon l'une quelconque des revendications précédentes, plus de 75% du volume de matériau du corps composite étant constitués de matériau léger.

6. Bras de support de soc de semoir selon l'une quelconque des revendications précédentes, l'au moins un insert de matériau dur (12) étant constitué d'acier.

7. Bras de support de soc de semoir selon l'une quelconque des revendications précédentes, le matériau léger possédant une densité de moins de 3/4 de la densité de l'acier, notamment une densité de moins de 5 kg/dm³.

8. Bras de support de soc de semoir selon l'une quelconque des revendications précédentes, le matériau léger étant constitué d'aluminium, d'un alliage d'aluminium, d'un métal léger ou d'un alliage de métal léger.

9. Bras de support de soc de semoir selon l'une quelconque des revendications 1 à 7, le matériau léger étant constitué d'un matériau non métallique, notamment d'une matière plastique renforcée par fibres.

10. Bras de support de soc de semoir selon l'une quelconque des revendications précédentes, le corps de bras de support (9), notamment la section principale (9a) de celui-ci, étant réalisé en matériau léger, un corps en matériau plein doté d'un profil de section transversale en forme de T ou en forme de TT ou en forme de I étant réalisé au moins par sections.

11. Bras de support de soc de semoir selon l'une quelconque des revendications 1 à 9, le corps de bras de support (9) étant réalisé comme corps creux doté d'une section transversale fermée à profil creux.

12. Bras de support de soc de semoir selon l'une quelconque des revendications précédentes, le corps de bras de support (9) étant réalisé comme corps coulé et l'au moins un insert en matériau dur (12) étant coulé dans le matériau léger coulé ou y étant fixé dedans ultérieurement.

13. Semoir comprenant une pluralité de bras de support de soc de semoir (7) selon l'une quelconque des revendications précédentes.
